# EUROPÄISCHE PATENTSCHRIFT

(11) **EP 1 134 024 B1**
(45) Veröffentlichungstag und Bekanntmachung des Hinweises auf die Patenterteilung: **26.10.2005**
(21) Anmeldenummer: 01102600.2
(22) Anmeldetag: 06.02.2001
(51) Int. Cl.: B01L 3/02, G01N 35/10, B01L 7/00

(54) **Temperierter Probennehmer für Fluide**
Temperature-controlled sampling device for fluids
Dispositif de prélèvement thermostaté pour fluides

(30) Priorität: 06.02.2000 DE 10004941
(43) Veröffentlichungstag der Anmeldung: 19.09.2001
(73) Patentinhaber: Minitubes GmbH, 80333 München (DE)
(72) Erfinder: Offen, Reimer, 22941 Bargteheide (DE); Kiessling, Jürgen, 36110 Schlitz-Bernshausen (DE)
(74) Vertreter: Siemons, Norbert

(56) Entgegenhaltungen:
- EP-B- 0 496 962
- DE-A- 4 102 336
- GB-A- 2 121 259

## Beschreibung

Die Erfindung betrifft einen temperierten Probennehmer für Flüssigkeiten, Gase oder andere Fluide.

Temperierte Probennehmer werden insbesondere in automatischen und halbautomatischen Analysengeräten für die Medizin, Biotechnik, Umweltanalytik und Substanzanalyse eingesetzt, bei denen flüssige, gasförmige oder andere fluide Proben bzw. Reagenzien aufgenommen, transportiert und abgegeben werden.

Dabei können die Proben mittels des temperierten Probennehmers temperiert werden. Dies kann beispielsweise bei körpereigenen Flüssigkeiten, Substanzen oder Stoffen erforderlich sein, die auf Körpertemperatur gehalten werden müssen.

Häufig treten Probleme bei der Temperierung, Flüssigkeitsdetektion, Mischung usw. der Proben auf.

Nachfolgend werden einige bekannte Systeme und deren Mängel vorgestellt:

Eine Hohlnadel mit einem Hohlraum, durch den temperiertes Wasser oder eine andere Flüssigkeit zum Temperieren der Hohlnadel gepumpt wird. Nachteilig bei diesem System sind das Bakterienwachstum in der Temperierflüssigkeit, die deshalb häufig ausgetauscht werden muß, auch wenn sie Zusatzmittel zum Verhindern des Bakterienwachstums enthält. Da der Austausch der Temperierflüssigkeit nicht vom Anwender durchgeführt werden kann, sind die Servicekosten hoch. Außerdem ist bei diesem System der Geräteaufwand hoch. Eine Temperierung bis zur Spitze der Hohlnadel ist nicht möglich, da der Hohlraum nicht bis zur Spitze reicht.

Ferner gibt es Hohlnadeln, die mit einem aufgebrachten Kupfermantel mit Folienheizung oder Heizwicklung beheizt werden. Die Folienheizung besteht aus einer Folie mit einer aufkaschierten Heizschicht. Die Folie ist ein verhältnismäßig schlechter Wärmeleiter. Die Folienheizung kann nur auf größere Nadeldurchmesser aufgeklebt werden. Die Klebeverbindung der Folienheizung kann sich leicht lösen. Nachteilig ist auch der zu träge Wärmeübergang, wenn abwechselnd gekühlt (z.B. auf Umgebungstemperatur) und beheizt wird. Außerdem ist der Außendurchmesser der Hohlnadel mit den aufgebrachten Schichten zu groß. Heiz- und Leveldetektionsfehler können durch eindringende Feuchtigkeit aufgrund Kapillarwirkung u.a. entstehen. Eine genaue Temperierung bis zur Spitze ist nicht möglich, und die Temperaturführung ist schlecht. Nachteilig sind auch große Trägheit, geringe Konstantheit und aufwendige Bauart dieses Systems.

Des weiteren gibt es Hohlnadeln mit direkt aufgebrachter Heizwicklung. Nachteilig ist hier der nur linienförmige Wärmeübergang und die zu langsame und träge Temperaturführung, die meist separate Vorwärmbauteile notwendig macht. Das Temperatur-Einschwingverhalten dieses Systems ist ebenfalls ungünstig und erfordert eine aufwendige Temperaturregelung.

Ein mit einem Heizdraht heizbares Pipettierröhrchen ist in EP-A-0 496 962 beschrieben.

Alle vorgenannten Systeme haben konstruktionsbedingt einen großen Außendurchmesser, so daß zum Eintauchen in kleine Probengefäße eine relativ lange, untemperierte Nadelspitze erforderlich ist. Infolgedessen können sehr geringe Probenmengen nur bedingt oder nicht behandelt werden. Konstruktionsbedingt treten häufig Heiz- und Leveldetektionsfehler durch Eindringen von Feuchtigkeit bzw. Kapillarwirkungen auf. Grund dafür sind die vielen mechanisch gefügten Bauteile, Verklebungen, Schrumpfschläuche u.a.. Die beiden letztgenannten Systeme mit Heizdraht oder Heizfolien haben nur eine linienförmige Wärmeübertragungszone und sind demzufolge träge und ungenau.

Alle vorstehenden Ausführungen haben den Nachteil, daß sie den Außendurchmesser des Probennehmers stark vergrößern und daß der Wärmeübergang verhältnismäßig langsam ist. Die sehr lange, unbeheizte Nadelspitze läßt eine genaue Temperierung nicht zu, insbesondere von kleinen Probenmengen.

Weitere Probleme bisheriger Systeme sind:
Für die Vermischung von Substanzen werden separate Rühreinrichtungen eingesetzt. Wenn diese mit verfahren werden müssen, behindern sie eine weitere Beschleunigung der Verfahrbewegungen bzw. verlängern die Analysenzeit und sind aufwendig.

Der Deckeldurchstich von geschlossenen Gefäßen wird nur über separate Vorstecheinrichtungen gelöst, die einen höheren Konstruktionsaufwand und höhere Gerätekosten verursachen.

Verschleppungen bzw. Leveldetektionsprobleme treten infolge der Vielzahl der Einzelteile und der Verklebungen, Schrumpfschläuche, Sensordrähte u.a. der bisherigen Probennehmer auf. Die scharfen Kanten, Ecken und kapillaren Strukturen der bisherigen Systeme können Verschleppungen verursachen, die nur durch aufwendigere Spülungen mit Reinigungsflüssigkeit verhindert werden können. Längere Spülzeiten bedingen längere Zykluszeiten des Analysengerätes und erhöhten Reinigungsflüssigkeitsbedarf bzw. Entsorgungsaufwand. Feuchtigkeitseindringungen in den Kapillaren können die Funktion der Leveldetektion verhindern.

Eine Erkennung von Nadelverstopfungen ist bisher nur in wenigen Analysengeräten integriert und sehr aufwendig. Insbesondere bei der Blutgerinnungsmessung besteht eine erhöhte Gefahr der Verstopfung, die zu Fehlmessungen und erhöhten Ausfallzeiten führen kann.

Davon ausgehend liegt der Erfindung die Aufgabe zugrunde, einen temperierten Probennehmer zur Verfügung zu stellen, der weniger aufwendig und mit geringerem Querschnitt ausgeführt werden kann und günstigere Gebrauchseigenschaften aufweist.

Die Aufgabe wird durch einen Probennehmer mit den Merkmalen des Anspruches 1 gelöst. Vorteilhafte Ausgestaltungen sind in den Unteransprüchen angegeben.

Bei dem erfindungsgemäßen Probennehmer gemäß Anspruch 1, insbesondere in den Ausgestaltungen der Ansprüche 2 bis 5, tragen die Beschichtungen nur sehr dünn auf, so daß nur eine unwesentlichen Vergrößerung des Querschnittes entsteht. Außerdem liegt die Heizschicht im Gegensatz zu einer Heizwicklung oder einer Heizfolie vollflächig auf der isolierenden Schicht bzw. der Hohlnadel auf. Hierdurch hat die Heizschicht einen innigen Kontakt zur isolierenden Schicht bzw. Hohlnadel und wird die Heizleistung sehr schnell auf die innen liegende Flüssigkeit übertragen. Die isolierende Schicht kann die Hohlnadel vollständig oder annähernd vollständig oder teilweise bedecken und die Heizschicht kann die isolierende Schicht vollständig oder annähernd vollständig oder teilweise bedecken. Die isolierende Schicht kann z.B. aus Glaskeramik, Teflon, Diamant, Bornitrid oder Ähnlichem bestehen. Die Heizschicht kann z.B. aus bekannten Widerstandsmaterialien (beispielsweise für Heizwiderstände) bestehen. Beispielsweise kann sie aus Metallen, Metallegierungen oder Halbleitermaterialien bestehen. Vorteilhafterweise weist sie einen hohen spezifischen Widerstand und einen großen Temperaturkoeffizienten auf

Die Ausgestaltungen des Probennehmers gemäß den Ansprüchen 6 bis 8 sind insbesondere von Vorteil, wenn die Temperierung etwas langsamer sein darf. Glas oder Kunststoff können für die Dosierung bestimmter Fluide günstiger sein bzw. die Herstellungskosten des Probennehmers herabsenken. Ferner kann bei Glas oder Kunststoff auf eine isolierende Schicht verzichtet werden.

Die Ausgestaltung gemäß Anspruch 9 ermöglicht ein einfaches Austauschen des Probennehmers durch den Benutzer. Die Vorrichtung kann ein Analysengerät sein, das insbesondere eine mit der Hohlnadel zu verbindende Verdrängungseinrichtung und eine elektrische Versorgungseinrichtung für die Heizschicht aufweisen kann. Die Hohlnadel kann im Analysengerät über einen Schraubanschluß lösbar mit einem Pipettierschlauch verbunden sein, der mit einer Verdrängungseinrichtung des Analysengerätes verbunden ist.

Durch die Ausgestaltung von Anspruch 10 kann ein Temperatursensor eingespart werden. Außerdem kann hierbei eine über die Länge der elektrisch leitenden Heizschicht gemittelte Temperatur gemessen werden, die sehr nahe an der Probe angeordnet ist, so daß sich eine sehr gute Regelung ergibt.

Durch die Kalibrierung gemäß den Ansprüchen 11 und 12 wird erreicht, daß die Genauigkeitsanforderungen an die Beschichtungen der Hohlnadel gering sind.

Fast alle Probennehmer sind mit einer Flüssigkeits- oder Leveldetektion ausgerüstet, die entweder
- den Widerstand zwischen zwei Kontakten oder
- die Kapazität zwischen der Hohlnadel und der Oberfläche des zugehörigen Gerätes mißt.

Beide Verfahren haben einige Nachteile. Zum Beispiel kann beim ersten oft nicht unterschieden werden, ob der Probennehmer lediglich mit einer geringen Flüssigkeitsmenge benetzt oder eingetaucht ist. Bei der zweiten Methode ist die Auswertung des Meßsignals verhältnismäßig aufwendig. Außerdem muß die Oberfläche des Gerätes eine gute Verbindung zur elektrischen Masse haben.

Der Probennehmer nach Anspruch 13 überwindet vorstehende Schwierigkeiten und löst die eingangs beschriebenen Probleme der Verschleppungen bzw. Leveldetektion. Die Kapazität wird mit einem Prinzip gemessen, das die Auswertung sehr vereinfacht und sich an verschiedene Anforderungen per Software anpassen läßt. Dabei wird ein elektrischer Impuls auf die Hohlnadel gegeben. Die Anstiegszeit der Flanke dieses Impulses wird durch die Kapazität zwischen der Hohlnadel und der elektrischen Masse bestimmt und dem Innenwiderstand des Impulses. Durch Ausmessen der Spannung an der Hohlnadel nach einer kurzen Verzögerungszeit nach Anlegen des Impulses kann die Größe der Kapazität bestimmt werden. Die Verzögerungszeit muß dabei konstant gehalten werden.

Die Ausgestaltung des Probennehmers von Anspruch 14 ermöglicht die Detektion der Flüssigkeit durch eine Widerstandsmessung. Zusätzlich besteht die Möglichkeit, die kapazitive und die resistive Flüssigkeitsdetektion zu kombinieren.

In der Ausgestaltung der Ansprüche 15 und 16 kann der Probennehmer als Mischeinrichtung arbeiten, beispielsweise in einem Automaten, in dem flüssige Proben in einen Meßkanal übertragen, mit Reagenzien versetzt und durchmischt werden. Dies wird bisher durch einen getrennten Mischer durchgeführt. Wird die Hohlnadel durch einen Elektromagneten oder durch Ultraschall in Schwingungen versetzt, dann übernimmt der Probennehmer diese Aufgabe.

Mit der Ausgestaltung nach Anspruch 17 ist es möglich, den Probennehmer durch einen Deckel zu stechen und tief in eine Flüssigkeit einzutauchen. Hierfür muß die weitere Beschichtung sehr hart sein. Geeignet hierfür sind z.B. Diamant und Bornitrid.

Die Ausgestaltung gemäß Anspruch 18 verhindert, daß nach dem Durchstich des Probennehmers durch die teilweise sehr dicken gummiartigen Probenverschlüsse beim Ansaugen der Probe aus dem Gefäß ein Vakuum entsteht. Dies kann die Genauigkeit der Dosierung der Probe vermindern. Die Schlitze schwächen den Probennehmer grundsätzlich nicht in unzulässigem Ausmaß, weil dieser ohnehin eine größere Wandstärke zum Erzielen der hohen Einstechkraft bzw. Knicksteifigkeit zum Durchstechen des Deckels aufweist. Die Schlitze können insbesondere als Einfräsungen ausgeführt sein. Grundsätzlich ist ein einziger Schlitz ausreichend. Mehrere Schlitze sind vorzugsweise gleichmäßig um den Umfang des Probennehmers verteilt. Vorzugsweise sind die Schlitze schräg zum Nadelzentrum ausgerichtet. Hierdurch wird einem Eindringen des Materials (z.B. Gummi) des Probenverschlusses und einem Versperren des Schlitzes entgegengewirkt.

Die Ausgestaltung von Anspruch 19 ermöglicht, beim Aufnehmen von Flüssigkeiten eine Verstopfung der Hohlnadel zu detektieren, da in diesem Falle ein Druckabfall gemessen und ausgewertet werden kann. Die Drucksensoren können Dehnungsmeßstreifen, Druckfolien u.a. sein.

Bei der Ausgestaltung von Anspruch 20 ist der Ultraschallgeber von Anspruch 16 in die Beschichtungen integriert. Diese Art der Ultraschallerzeugung wurde in "Nature", Bd. 400, Seite 853 beschrieben. Der Ultraschall kann auch zum Reinigen des Probennehmers verwendet werden.

Durch die Ausgestaltung von Anspruch 21 wird eine sichere Isolation erreicht, da eventuelle sogenannte Pinholes (Löcher geringen Durchmessers) in einer Teilschicht von einer benachbarten Teilschicht überdeckt werden. Dabei wird ausgenutzt, daß es extrem unwahrscheinlich ist, daß in den einander überdeckenden Teilschichten an derselben Stelle Pinholes auftreten.

Nachfolgend wird die Erfindung anhand der anliegenden Zeichnungen von Ausführungsbeispielen näher erläutert. In den Zeichnungen zeigen:
- Fig. 1: einen temperierten Probennehmer mit einer elektrisch leitenden Heizschicht, die in Nähe der Spitze Kontakt mit der Hohlnadel aus Stahl aufweist, in einem Längsschnitt;
- Fig. 2: einen temperierten Probennehmer mit einer elektrisch leitenden Heizschicht in Form von zwei Halbschalen im Längsschnitt;
- Fig. 3: den temperierten Probennehmer von Fig. 2 in Seitenansicht;
- Fig. 4: den temperierten Probennehmer von Fig. 2 und 3 im Querschnitt;
- Fig. 5: den Schichtenaufbau eines temperierten Probennehmers mit einer isolierenden Schicht aus übereinandergeschichteten isolierenden Teilschichten in einem vergrößerten Teilschnitt.

Bei der nachfolgenden Beschreibung verschiedener Ausführungsbeispiele sind übereinstimmende Bestandteile mit denselben Bezugsziffern bezeichnet.

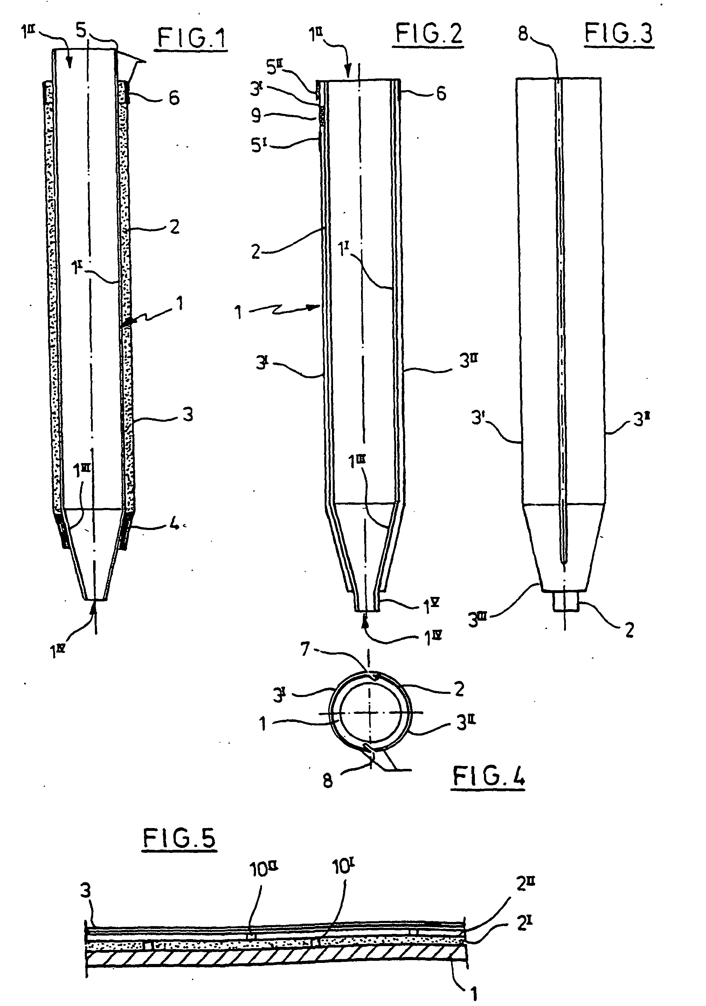

Der Probennehmer von Fig. 1 hat eine Hohlnadel 1 aus Stahl oder aus einem anderen elektrisch leitfähigen Material, die einen Zylinderabschnitt 1' mit einer endseitigen Öffnung 1" und am anderen Ende einen konischen Spitzenabschnitt 1''' mit einer Spitzenöffnung 1^{IV} aufweist.

Für das Aufnehmen einer Probe wird die Hohlnadel 1 mit ihrer Öffnung 1" an ein Verdrängungssystem (z.B. mit einem Zylinder und einem darin beweglichen Kolben) angeschlossen. Durch Verdrängen von Luft mittels des Verdrängungssystems kann dann durch die Spitzenöffnung 1^{IV} eine fluide Probe in die Hohlnadel 1 eingesaugt und aus dieser durch die Spitzenöffnung 1^{IV} wieder abgegeben werden. Die in der Hohlnadel 1 befindliche Probe ist temperierbar, wozu der Probennehmer die nachfolgend beschriebenen Bestandteile aufweist:

Über beinahe die gesamte Länge des Zylinderabschnitts 1' der Hohlnadel 1 ist die isolierende Schicht 2 aufgetragen. Auf der Außenseite der isolierenden Schicht 2 ist wiederum eine elektrisch leitende, vollflächige Heizschicht 3 aufgebracht. Die elektrisch leitende Heizschicht 3 steht im Bereich des konischen Spitzenabschnitts 1" über das untere Ende der isolierenden Schicht 2 vor und hat dort im Verbindungsbereich 4 elektrische Verbindung mit der Hohlnadel 1.

Das obere Ende der Hohlnadel 1, das über die isolierende Schicht 2 und die Heizschicht 3 hinaussteht, bildet einen umlaufenden elektrischen Kontakt 5. Außerdem ist der obere Rand der Heizschicht 3 mit einem umlaufenden Kontakt 6 versehen.

Der Probennehmer kann in seinem oberen Bereich in oder an einem Analysengerät lösbar bzw. austauschbar befestigt sein, beispielsweise durch Einstecken oder Einschnappen. Dabei wird eine Verbindung der Öffnung 1" zu einer Verdrängungseinrichtung des Analysengerätes und eine elektrische Verbindung der Kontakte 5, 6 mit einer elektrischen Versorgungseinrichtung bzw. Elektronik des Analysengerätes hergestellt. Hierdurch ist es möglich, sowohl eine Probe in die Hohlnadel einzuziehen bzw. aus dieser abzugeben und mittels eines elektrischen Stromes durch die Heizschicht 3 die Hohlnadel 1 und damit eine aufgenommene Probe zu temperieren. Überdies ist es mit dem Analysengerät möglich, die Probe im Probennehmer zu transportieren.

Der Probennehmer von Fig. 2 und 3 unterscheidet sich von dem vorbeschriebenen zunächst dadurch, daß an das vordere Ende des konischen Spitzenabschnittes 1''' ein kleiner zylindrischer Spitzenabschnitt 1^{V} der Hohlnadel 1 angrenzt, der die Spitzenöffnung 1^{IV} aufweist.

Außerdem ist die isolierende Schicht 2 über den konischen Spitzenabschnitt 1''bis auf den zylindrischen Spitzenabschnitt 1^{V} heruntergezogen.

Ferner ist die Heizschicht 3 in Form von zwei Halbschalen 3', 3" ausgebildet, zwischen denen auf beiden Seiten des Probennehmers ein Schlitz 7, 8 ausgebildet ist. Die Schlitze 7, 8 sind durch Einfräsungen gebildet, die bis in die Hohlnadel 1 hineinreichen. Die Einfräsungen 7, 8 weisen einen Neigungswinkel zum Radius der Hohlnadel 1 auf und sind gegenüberliegend angeordnet. Sie reichen vom oberen Rand des Probennehmers bis auf das Niveau des konischen Spitzenabschnittes 1"'. Darunter weisen die Halbschalen 3', 3" eine elektrische Verbindung 3''' auf.

Die Halbschale 3' ist in der Nähe des oberen Endes des Probennehmers unterbrochen durch eine Schicht aus porösem Silizium 9 in Halbringform. Die Halbschale 3' hat einen oberen Abschnitt, der vom oberen Ende der Hohlnadel 1 ausgeht und die Schicht aus porösem Silizium 9 überdeckt. Dieser Abschnitt der Halbschale 3' ist von dem unteren Abschnitt der Halbschale 3', der sich unterhalb der Schicht aus porösem Silizium 9 befindet, getrennt. Auf beiden Seiten der Schicht 9 hat die elektrisch leitfähige Halbschale 3' jeweils einen elektrischen Kontakt 5', 5".

Die andere elektrisch leitfähige Heizschicht 3" hat am oberen Ende ebenfalls einen Kontakt 6.

Durch Verbinden der Kontakte 5', 6 mit einer elektrischen Versorgungseinrichtung ist es möglich, eine Probe in der Hohlnadel 1 zu beheizen. Werden die Kontakte 5" und 6 mit einer elektrischen Versorgungseinrichtung verbunden, so werden durch die Schichtenstruktur im Oberbereich des Probennehmers Ultraschallwellen erzeugt, die zu Mischzwecken genutzt werden können. Dies wird durch Beheizung der Schicht 9 bewirkt. Durch zusätzliche Verbindung der Kontakte 5' und 6 mit einer elektrischen Versorgungseinrichtung kann zugleich eine Beheizung des gesamten Probennehmers bewirkt werden.

Die Schlitze 7, 8 ermöglichen einen Druckausgleich beim Durchstechen des Probennehmers durch den Deckel eines Probengefäßes.

Gemäß Fig. 5 sind auf einer Hohlnadel 1 aus Stahl zwei isolierende Teilschichten 2', 2"übereinandergeschichtet. Auf der obersten isolierenden Teilschicht 2" befindet sich eine elektrisch leitfähige Heizschicht 3.

In den isolierenden Teilschichten 2', 2" in zufälliger Verteilung vorhandene Pinholes 10', 10" kommen mit extrem hoher Wahrscheinlichkeit nicht zur Überdeckung, so daß die Isolierung durch die aus den Teilschichten 2', 2" insgesamt gebildete isolierende Schicht gewährleistet ist.

### Bezugszeichenliste

- 1: Hohlnadel
- 1': Zylinderabschnitt
- 1": Öffnung
- 1''': konischer Spitzenabschnitt
- 1^{IV}: Spitzenöffnung
- 1^{V}: zylindrischer Spitzenabschnitt
- 2: isolierende Schicht
- 2', 2'': isolierende Teilschichten
- 3: Heizschicht
- 3', 3": Halbschalen
- 3''': elektrische Verbindung der Halbschalen
- 4: Verbindungsbereich
- 5,6: Kontakte
- 5', 5": Kontakte
- 7, 8: Schlitze
- 9: poröses Silizium
- 10', 10": Pinholes

## Patentansprüche

1. Temperierter Probennehmer für Flüssigkeiten, Gase oder andere Fluide mit einer Hohlnadel (1) aus Stahl oder einem anderen Metall auf der elektrisch isoliert eine Heizung aufgebracht ist, **dadurch gekennzeichnet, daß** die Hohlnadel (1) mit einer elektrisch isolierenden Schicht (2) überzogen ist, auf der vollflächig eine dünne elektrisch leitende Heizschicht (3) aufgebracht ist.

2. Probennehmer nach Anspruch 1, **dadurch gekennzeichnet, daß** die elektrisch leitende Heizschicht (3) weit bis zur Spitze der Hohlnadel (1) vorgezogen ist.

3. Probennehmer nach Anspruch 1 oder 2, **dadurch gekennzeichnet, daß** die dünne elektrisch leitende Heizschicht (3) aus Metall auf die elektrisch isolierende Schicht (2) aufgedampft, aufgesputtert oder plasmabeschichtet ist.

4. Probennehmer nach einem der Ansprüche 1 bis 3, **dadurch gekennzeichnet, daß** die isolierende Schicht (2) nicht bis zur Spitze der Hohlnadel (1) erstreckt ist und die elektrisch leitende Heizschicht (3) über diese isolierende Schicht (2) in den Abstandsbereich zwischen isolierender Schicht (2) und Spitze hinausragt und dort elektrischen Kontakt (4) zur Hohlnadel (1) hat.

5. Probennehmer nach einem der Ansprüche 1 bis 3, **dadurch gekennzeichnet, daß** die elektrisch leitende Heizschicht (3) in Form von zwei Halbschalen (3', 3") aufgebracht ist, die an einem Ende miteinander elektrisch verbunden (3'") sind.

6. Probennehmer nach einem der Ansprüche 1 bis 5, **dadurch gekennzeichnet, daß** die Hohlnadel (1) statt aus Stahl oder einem anderen Metall aus Glas oder aus Kunststoff besteht.

7. Probennehmer nach Anspruch 6, **dadurch gekennzeichnet, daß** die Hohlnadel aus einem Kunststoffschlauch oder Glasrohr besteht.

8. Probennehmer nach Anspruch 6 oder 7, **dadurch gekennzeichnet, daß** keine isolierende Schicht vorhanden ist.

9. Probennehmer nach einem der Ansprüche 1 bis 8, **dadurch gekennzeichnet, daß** die beschichtete Hohlnadel (1) eine lösbare Befestigung an einer Vorrichtung aufweist und/oder die elektrisch leitende Heizschicht (3) über Klemmkontakte (5, 6) elektrisch mit der Vorrichtung verbunden ist.

10. Probennehmer nach einem der Ansprüche 1 bis 9, **dadurch gekennzeichnet, daß** eine Elektronik zum zyklischen Messen des Widerstandes der elektrisch leitenden Heizschicht (3), Ermitteln einer Strompulslänge aufgrund des gemessenen Widerstandes und Geben eines entsprechenden Stromimpulses auf die Heizschicht (3) vorhanden ist.

11. Probennehmer nach Anspruch 10, **dadurch gekennzeichnet, daß** die Elektronik mittels eines temperierten Wasserbades kalibriert ist.

12. Probennehmer nach Anspruch 10 oder 11, **dadurch gekennzeichnet, daß** zur Kalibrierung der Elektronik ein kalibrierter Temperatursensor, der von außen an dem Probennehmer anliegt, vorhanden ist.

13. Probennehmer nach einem der Ansprüche 1 bis 12, **dadurch gekennzeichnet, daß** eine Elektronik zum Detektieren des Eintauchens des Probennehmers in Flüssigkeit durch Messung der sich verändernden Kapazität, indem die Entladekurve zu zwei Zeitpunkten gemessen und ausgewertet wird, vorhanden ist.

14. Probennehmer nach einem der Ansprüche 1 bis 13, **dadurch gekennzeichnet, daß** mindestens eine Halbschale (3', 3") der Heizschicht (3) bis ca. 2 mm zur Spitze der Hohlnadel (1) reicht und die isolierende Schicht (2) und gegebenenfalls die Innen- und Außenschicht antiadhäsiv (hydrophob) oder adhäsiv (hydrophil) ausgelegt ist.

15. Probennehmer nach einem der Ansprüche 1 bis 14, **dadurch gekennzeichnet, daß** ein Elektromagnet zum Versetzen des Probennehmers zum Mischen in Schwingungen vorhanden ist.

16. Probennehmer nach einem der Ansprüche 1 bis 15, **dadurch gekennzeichnet, daß** ein Ultraschallgeber zum Versetzen des Probennehmers zum Mischen in Schwingungen vorhanden ist.

17. Probennehmer nach einem der Ansprüche 1 bis 16, **dadurch gekennzeichnet, daß** über die Heizschicht (3) eine weitere substanzabweisende adhäsive (hydrophile) oder antiadhäsive (hydrophobe) und/oder sehr harte Beschichtung aufgebracht ist, die der elektrischen Isolierung nach außen und dem mechanischen Schutz dient.

18. Probennehmer nach einem der Ansprüche 1 bis 17, **dadurch gekennzeichnet, daß** ein Schlitz (7, 8) oder mehrere Schlitze (7, 8) in Längsrichtung der Hohlnadel (1) vorhanden sind.

19. Probennehmer nach einem der Ansprüche 1 bis 18, **dadurch gekennzeichnet, daß** ein Druckaufnehmer zum Überwachen des Drucks im Probennehmer beim Aufnehmen und Abgeben von Flüssigkeiten vorhanden ist.

20. Probennehmer nach einem der Ansprüche 1 bis 19, **dadurch gekennzeichnet, daß** in einem Teil des Probennehmers, zwischen isolierender Schicht (2) und Heizschicht (3), poröses Silizium (9) aufgebracht ist zur Erzeugung von Ultraschallwellen durch die Beheizung.

21. Probennehmer nach einem der Ansprüche 1 bis 20, **dadurch gekennzeichnet, daß** die isolierende Schicht (2) aus mindestens zwei übereinandergeschichteten isolierenden Teilschichten (2', 2") aufgebracht ist.

## Claims

1. A temperature-adjusted sampler for liquids, gases or other fluids including a hollow needle (1) in steel or another metal on which a heating is deposited so as to be electrically insulated, **characterized in that** the hollow needle (1) is coated with an electrically insulating layer (2) which has deposited thereon in complete intimate contact a thin, electrically conducting heating layer (3).

2. The sampler according to claim 1, **characterized in that** the thin, electrically conducting heating layer (3) is extended far towards the tip of the hollow needle (1).

3. The sampler according to claim 1 or 2, **characterized in that** the thin, electrically conducting heating layer (3) in metal is vapour-deposited or sputtered or plasma coated on the electrically insulating layer (2).

4. The sampler according to any one of claims 1 to 3, **characterized in that** the insulating layer (2) is not extended up to the tip of the hollow needle (1) and the electrically conducting heating layer (3) projects beyond this insulating layer (2) into the spacing region between the insulating layer (2) and the tip and makes electrical contact (4) with the hollow needle (1) there.

5. The sampler according to any one of claims 1 to 3, **characterized in that** the electrically conducting heating layer (3) is deposited in the shape of two half-cups (3', 3") which are electrically interconnected at one end.

6. The sampler according to any one of claims 1 to 5, **characterized in that** the hollow needle (1) is made of glass or plastic rather than steel or another metal.

7. The sampler according to claim 6, **characterized in that** the hollow needle is made of a flexible plastic tube or of a glass tube.

8. The sampler according to claim 6 or 7, **characterized in that** there is no insulating layer.

9. The sampler according to any one of claims 1 to 8, **characterized in that** the coated hollow needle (1) has a detachable fixing to a device and/or the electrically conducting layer (3) is electrically connected to the device via clip contacts (5, 6).

10. The sampler according to any one of claims 1 to 9, **characterized in that** there is an electronic unit to cyclically measure the resistance of the electrically conducting heating layer (3), to determine a current pulse length owing to the resistance measured, and provide a corresponding current pulse to the heating layer (3).

11. The sampler according to claim 10, **characterized in that** the electronic unit is calibrated by means of a temperature-adjusted water bath.

12. The sampler according to claim 10 or 11, **characterized in that** a calibrated temperature sensor, which bears on the sampler from outside, exists to calibrate the electronic unit.

13. The sampler according to any one of claims 1 to 12, **characterized in that** there is an electronic unit to detect the immersion of the sampler in a liquid by measuring the varying capacitance in a way that the discharge graph is measured and evaluated at two times.

14. The sampler according to any one of claims 1 to 13, **characterized in that** at least one half-cup (3', 3") of the heating layer (3) extends up to 2 mm from the tip of the hollow needle (1) and the insulating layer (2) and, if required, the inside and outside layers are designed to be anti-adhesive (hydrophobic) or adhesive (hydrophilic).

15. The sampler according to any one of claims 1 to 14, **characterized in that** there is an electromagnet to cause the sampler to vibrate for the blending operation.

16. The sampler according to any one of claims 1 to 15, **characterized in that** there is an ultrasonic transmitter to cause the sampler to vibrate for the blending operation.

17. The sampler according to any one of claims 1 to 16, **characterized in that** the heating layer (3) has deposited thereon a further substance-repellent, adhesive (hydrophilic) or anti-adhesive (hydrophobic) coating and/or a very hard coating which serves the electrical insulation to the outside and mechanical protection.

18. The sampler according to any one of claims 1 to 17, **characterized in that** a slot (7, 8) or several slots (7, 8) exist in the longitudinal direction of the hollow needle (1).

19. The sampler according to any one of claims 1 to 18, **characterized in that** there is a pressure transducer to monitor the pressure in the sampler while liquids are being received and discharged.

20. The sampler according to any one of claims 1 to 19, **characterized in that** a portion of the sampler, between the insulating layer (2) and the heating layer (3), has deposited thereon porous silicon (9) to generate ultrasonic waves by means of heating.

21. The sampler according to any one of claims 1 to 20, **characterized in that** the insulating layer (2) is deposited in at least two insulating part-layers (2', 2") lying on top of each other.

## Revendications

1. Dispositif de prélèvement thermostaté pour liquides, gaz ou autres fluides comportant une aiguille creuse (1) en acier ou en un autre métal, sur laquelle un dispositif de chauffage isolé électriquement est disposé, **caractérisé en ce que** l'aiguille creuse (1) est recouverte d'une couche électriquement isolante (2) revêtue sur toute sa surface d'une couche mince de chauffage (3) électriquement conductrice.

2. Dispositif de prélèvement selon la revendication 1, **caractérisé en ce que** la couche de chauffage (3) électriquement conductrice s'étend largement jusqu'à la pointe de l'aiguille creuse (1).

3. Dispositif de prélèvement selon la revendication 1 ou 2, **caractérisé en ce que** la couche mince de chauffage (3) électriquement conductrice en métal est appliquée par évaporation, projection liquide ou projection plasma sur la couche électriquement isolante (2).

4. Dispositif de prélèvement selon l'une des revendications 1 à 3, **caractérisé en ce que** la couche isolante (2) ne s'étend pas jusqu'à la pointe de l'aiguille creuse (1) et la couche de chauffage (3) électriquement conductrice dépasse cette couche isolante (2) dans la plage de distance située entre la couche isolante (2) et la pointe et établit là un contact électrique (4) avec l'aiguille creuse (1).

5. Dispositif de prélèvement selon l'une des revendications 1 à 3, **caractérisé en ce que** la couche de chauffage (3) électriquement conductrice est constituée sous forme de deux demi-coques (3', 3") connectées électriquement entre-elles à une extrémité (3''').

6. Dispositif de prélèvement selon l'une des revendications 1 à 5, **caractérisé en ce que** l'aiguille creuse (1) est constituée en verre ou en un matériau synthétique au lieu d'acier ou d'un autre métal.

7. Dispositif de prélèvement selon la revendication 6, **caractérisé en ce que** l'aiguille creuse est constituée d'un tuyau en matière synthétique ou d'un tube en verre.

8. Dispositif de prélèvement selon la revendication 6 ou 7, **caractérisé en ce qu'**aucune couche isolante n'est présente.

9. Dispositif de prélèvement selon l'une des revendications 1 à 8, **caractérisé en ce que** l'aiguille creuse revêtue (1) présente une fixation détachable à un dispositif et/ou **en ce que** la couche de chauffage (3) électriquement conductrice est connectée électriquement au dispositif au moyen de bornes de contact (5, 6).

10. Dispositif de prélèvement selon l'une des revendications 1 à 9, **caractérisé en ce qu'**un dispositif électronique est pourvu pour périodiquement mesurer la résistance de la couche de chauffage (3) électriquement conductrice, déterminer une longueur d'impulsion de courant sur base de la résistance mesurée et émettre une impulsion de courant correspondante dans la couche de chauffage (3).

11. Dispositif de prélèvement selon la revendication 10, **caractérisé en ce que** le dispositif électronique est étalonné au moyen d'un bain d'eau thermostaté.

12. Dispositif de prélèvement selon la revendication 10 ou 11, **caractérisé en ce qu'**un capteur de température étalonné est pourvu, disposé à l'extérieur du dispositif de prélèvement, pour l'étalonnage du dispositif électronique.

13. Dispositif de prélèvement selon l'une des revendications 1 à 12, **caractérisé en ce qu'**un dispositif électronique est pourvu pour la détection de la submersion du dispositif de prélèvement dans un liquide grâce à la mesure de la modification de capacité, de telle manière que la courbe de décharge est mesurée et évaluée en deux instants.

14. Dispositif de prélèvement selon l'une des revendications 1 à 13, **caractérisé en ce qu'**au moins une demi-coque (3', 3") de la couche de chauffage (3) s'étend jusqu'à environ 2 mm de la pointe de l'aiguille creuse (1) et **en ce que** la couche isolante (2) et, le cas échéant, les couches interne et externe sont anti-adhésives (hydrophobes) ou adhésives (hydrophiles).

15. Dispositif de prélèvement selon l'une des revendications 1 à 14, **caractérisé en ce qu'**un électroaimant est pourvu pour le mélange du dispositif de prélèvement de manière à agiter par oscillations.

16. Dispositif de prélèvement selon l'une des revendications 1 à 15, **caractérisé en ce qu'**un transducteur ultrasonore est pourvu pour le mélange du dispositif de prélèvement de manière à agiter par oscillations.

17. Dispositif de prélèvement selon l'une des revendications 1 à 16, **caractérisé en ce qu'**une couche additionnelle répulsive adhésive (hydrophile) ou anti-adhésive (hydrophobe) et/ou très dure est appliquée sur la couche de chauffage (3), cette couche offrant l'isolation électrique vers l'extérieur et la protection mécanique.

18. Dispositif de prélèvement selon l'une des revendications 1 à 17, **caractérisé en ce qu'**une fente (7, 8) ou plusieurs fentes (7, 8) sont pourvues en direction longitudinale de l'aiguille creuse (1).

19. Dispositif de prélèvement selon l'une des revendications 1 à 18, **caractérisé en ce qu'**un capteur de pression est pourvu pour le contrôle de la pression dans le dispositif de prélèvement lors de l'admission et de l'émission de liquides.

20. Dispositif de prélèvement selon l'une des revendications 1 à 19, **caractérisé en ce que** du silicium poreux (9) est pourvu dans une partie du dispositif de prélèvement, entre la couche isolante (2) et la couche de chauffage (3) pour la production d'ondes ultrasonores par le réchauffement.

21. Dispositif de prélèvement selon l'une des revendications 1 à 20, **caractérisé en ce que** la couche isolante (2) est appliquée en au moins deux couches partielles (2', 2") isolantes disposées l'une par dessus l'autre.
